# EUROPÄISCHE PATENTSCHRIFT

(11) **EP 0 719 733 B1**
(45) Veröffentlichungstag und Bekanntmachung des Hinweises auf die Patenterteilung: **01.03.2000**
(21) Anmeldenummer: 95115825.2
(22) Anmeldetag: 07.10.1995
(51) Int. Cl.: C02F 1/38, C02F 11/12

(54) **Verfahren und Vorrichtung zur Aufbereitung eines (Dickstoffe enthaltenden) pumpfähigen Materials, vorzugsweise zur Sanierung eines Gewässers**
Process and apparatus for treating pumpable materials (containing thickening materials), preferably for purifying pond water
Procédé et appareil de traitement de matériaux pompables (contenant des matières épaisses), de préférence pour assainir un plan d'eau

(30) Priorität: 30.12.1994 DE 4447260
(43) Veröffentlichungstag der Anmeldung: 03.07.1996
(73) Patentinhaber: ANTON MÜSING GmbH & CO. KG, D-26810 Westoverledingen (DE)
(72) Erfinder: Sacklowski, Siegbert, Dipl.-Ing., D-26725 Emden (DE); Braakmann, Jörg, Dipl.-Ing., D-26871 Papenburg (DE)
(74) Vertreter: Lauerwald, Jörg

(56) Entgegenhaltungen:
- EP-A- 0 185 648
- EP-A- 0 496 915
- WO-A-95/19327
- DE-A- 2 051 234
- DE-A- 3 828 775
- DE-C- 4 109 759
- FR-A- 2 718 982
- US-A- 4 905 900
- US-A- 5 234 468

## Beschreibung

Die Erfindung betrifft ein Verfahren und eine Vorrichtung zur Aufbereitung eines Dickstoffe enthaltenen pumpfähigen Materials, vorzugsweise Sanierung eines Gewässers, insbesondere eines Binnengewässers gemäß der Oberbegriffe der Ansprüche 1 bzw. 9.

Insbesondere Binnengewässer sind in Industrieländern häufig belastet, und zwar belastet durch Schadstoffe und auch biologisch belastet durch ungünstige Organismen. Es können sich nämlich beispielsweise Schwermetalle und andere Kontaminierungen insbesondere auf dem Gewässergrund ablagern und an den Feststoffen des Gewässergrundes anlagern. Außerdem kann die Sauerstoffzehrung vermindert sein, so daß durch Rücklösung von Nährstoffen es immer wieder zu Algenblüten und damit zu einem "Umkippen" des Gewässers kommen kann.

In ähnlicher Weise wird die Entsorgung von pumpfähigen Materialien zunehmend ein Problem, z.B. die Entsorgung von Gülle.

Die EP-A- 496 915 offenbart ein Verfahren zum Aufbereiten von Ablagerungen, bei dem das zu behandelnde Material mit seinen anorganischen und oranischen Bestandteilen klassiert und dabei gegebenenfalls von Schadstoffen gereinigt wird.

Der Erfindung liegt die Aufgabe zugrunde, ein Verfahren bzw. eine Vorrichtung anzugeben, mit dem bzw. mit der eine Aufbereitung pumpfähigen Materials, insbesondere zur Sanierung eines Gewässers möglich ist, bei der die Umwelt möglichst wenig zusätzlich belastet wird und die möglichst energiesparend und kostengünstig durchgeführt werden kann.

Diese Aufgabe wird erfindungsgemäß in Verfahrenshinsicht dadurch gelöst, daß kontaminierte Anteile des Materials dadurch dekontamininiert werden, daß Kontaminierungsstoffe in der flüssigen Phase nach der Klassierung und vor der Entwässerung durch Energiebeaufschlagung mechanisch von den Feststoffen der zu dekontamierenden Anteile des Materials getrennt werden, indem die Energiebeaufschlagung mittels kurzzeitiger Druckbeaufschlagung mit wenigstens einer Luftkanone in einem entsprechenden Reaktor erfolgt.

Mit Hilfe der Luftkanone werden kurzzeitig Luftdruckstöße in den Reaktorbehälter eingeschossen, die das zu dekontaminierende Material erschüttern und eine effektive Trennung von Schadstoffen und Festanteilen in dem zu dekontaminierenden Material zeitigen. Das Verfahren ist relativ sparsam im Energieverbrauch, weil die Luftkanone nur sehr kurzzeitig und nur in zeitlichen Abständen abgeschossen zu werden braucht.

Die Schadstoffe selbst werden zunächst einmal im Flüssiganteil der flüssigen Phase, der eine obere Schicht über den Sedimenten bildet, gelöst und eingebunden. Um diese Einbindung in der flüssigen Phase aufrechtzuerhalten, können Trennhilfsmittel zugegeben werden, um eine Wiederverbindung zwischen den Schadstoffen und den Sedimenten zu verhindern. Hierfür kommen beispielsweise Tenside, also im wesentlichen herkömmliche Waschmittel, in Betracht. Der diese Schadstoffe enthaltende Flüssiganteil der flüssigen Phase kann beispielsweise von den Sedimenten abgeseiht bzw. abgezogen werden und z.B. unmittelbar einem für die Flüssigkeit vorgesehenen Filterungsprozeß zugeführt werden. Der sedimentierte Feststoffanteil kann seinerseits dem normalen, im nachfolgenden beschriebenen Entwässerungs- und Trocknungsprozeß zugeführt werden.

Zur Sanierung eines Gewässers wird als aufzubereitendes Material Schlamm aus dem Gewässer entnommen.

Durch eine Entschlammung des zu sanierenden Gewässers werden die Nährstoffdepots im Gewässer entfernt und wird somit die Nährstoffkette unterbrochen, so daß das Entstehen von unerwünschten Algenblüten und das damit verbundene Umkippen des Gewässers sowie die damit verbundene Sauerstoffzehrung verhindert wird. Durch die Aufbereitung und Reinigung des Schlammes können außerdem Kontaminierungen, wie z.B. Schwermetalle und Kohlenwasserstoffe, entsorgt werden bzw. Wertstoffe recyclet werden.

Eine Entschlammung des Gewässers und die nachfolgende Reinigung und Aufbereitung ist mit relativ niedrigem Arbeitsaufwand und relativ niedrigen Kosten bzw. Energieaufwendungen möglich. Auch kann dabei durchaus beispielsweise der Böschungsbewuchs eines Gewässers intakt bleiben und durch sorgfältige Aufbereitung und Reinigung des Schlammes fallen auch keine hohen Deponierungskosten an.

Zur Klassierung des Schlammes, vorzugsweise als erste Aufbereitung des Schlammes, wird vorzugsweise wenigstens ein Hydrozyklon verwendet, mit dem eine Klassierung des entnommenen Schlammaterials in Grobanteile und eine flüssige Phase sehr geringem Energieaufwand aber hohem Wirkungsgrad möglich ist. Die bei der Klassierung abgeschiedene flüssige Phase kann vorzugsweise mit Hilfe wenigstens eines weiteren Hydrozyklons weiter eingedickt werden. Die bei der Klassierung abgeschiedenen Grobanteile können, wenn sie ihrerseits nicht kontaminiert sind, was die Regel sein wird, da der eigentliche Grundsand des Gewässers normalerweise nicht verunreinigt wird, einfach auf einer Halde abgelagert und dort automatisch getrocknet und entwässert werden und als beispielsweise Baumaterial weiterverwendet werden.

In gleicher bzw. ähnlicher Weise kann z.B. auch Gülle aufbereitet und entsorgt werden, wobei Nitratbelastungen ähnlich wie Kontaminierungen behandelt werden können.

Die gegebenenfalls weiter eingedickte flüssige Phase des Materials wird vorzugsweise einem nachfolgenden Entwässerungs- und Trocknungsprozeß zugeführt, indem weiterhin Feststoffe aus der flüssigen Phase ausgeschieden werden bis nach Möglichkeit der überwiegende Feststoffanteil von der dann noch übrig bleibenden Flüssigkeit getrennt ist.

Dabei wird vorzugsweise ein Entwässerungs- und Trocknungsprozeß verwendet, der prinzipiell etwa aus der Ziegelindustrie bekannt ist. Die ausgeschiedenen Feststoffe werden nämlich nach Art von Ziegelrohlingen vorzugsweise an der Luft getrocknet und entwässert, was fast ohne Energieaufwand möglich ist. Zwar brauchen derartige Vorgänge eine gewisse Zeit; der Zeitfaktor ist aber bei Sanierungen von Gewässern, wie auch bei der Entsorgung von Gülle, oftmals nicht kritisch. Zeit zur Sanierung der Gewässer oder von Güllebecken ist oftmals ausreichend vorhanden, so daß sich beispielsweise die Sanierung von einigen Gewässern zwei bis drei Jahre hinziehen darf. Wichtiger ist oftmals die Kostengünstigkeit der angewandten Verfahren und die Effektivität des Ergebnisses sowie die Schonung der Landschaft bei der Sanierung.

Vorzugsweise wird die flüssige Phase einer Sedimentationseinrichtung zugeleitet, in der sich Feststoffe großflächig in dünnen Schichten in Sedimentationskästen ablagern, wobei die Sedimentationskästen zur Erreichung einer bestimmten Sedimenthöhe vorzugsweise mehrmals beschickt werden. Danach werden dann vorzugsweise Feststoffe der flüssigen Phase zur natürlichen Trocknung auf der Luft ausgesetzten, überdachten Trocknungsstellen gelagert. Schließlich können die so gelagerten Feststoffe, beispielsweise in Form von Ziegeln, auf einer normalen Erdstoffdeponie deponiert werden, vorausgesetzt, daß keine Kontaminierung dieser Feststoffe vorliegt.

Die bei dem Trocknungs- und Entwässerungsprozeß letztendlich ausgeschiedene Flüssigkeit wird vorzugsweise gefiltert, wobei bevorzugt zur Filterung der Flüssigkeit ein Filter aus pflanzlichem Material, vorzugsweise aus Schilf oder Torf, verwendet wird. Dieses Pflanzenmaterial des Filters kann letztlich zusammen mit den Filterrückständen thermisch entsorgt werden, d.h. verbrannt werden. Die Flüssigkeit kann vor der Filterung noch einer Sedimentationsstufe zugeleitet werden, um nochmals eventuelle Feststoffanteile abzuscheiden.

Das Schlammaterial wird aus einem zu sanierenden Gewässer vorzugsweise mittels eines Saugbaggers entnommen, was kontinuierlich durchgeführt werden kann. Auch der nachfolgende Klassierungs-, Trocknungs- und Entwässerungsprozeß, sowie der Reinigungsprozeß der Flüssigkeit, kann quasi kontinuierlich innerhalb einer Mehrzahl von Stufen geschehen.

Eventuell kontaminierte Anteile des aufzubereitenden Materials müssen ggf. innerhalb des Aufbereitungsprozesses frühzeitig dekontaminiert werden. Gegebenenfalls vorhandene Schadstoffe sind voraussichtlich in überwiegendem Maße an den Feststoffanteilen angelagert, die sich noch in der flüssigen Phase befinden, nachdem eine erste Klassierung, d.h. eine Ausscheidung von groben Anteilen, z.B. Sandanteilen, beispielsweise in einem Hydrozyklon, stattgefunden hat. Erfindungsgemäß ist daher vorzugsweise vorgesehen, daß die flüssige Phase nach der Klassierung bei Bedarf dekontaminiert wird, und zwar vor der weiteren Entwässerung.

Eine Vorrichtung zur Durchführung des erfinderischen Verfahrens ergibt sich aus Anspruch 9.

Da die meisten Binnengewässer einen Schilfgürtel aufweisen, ist der Einsatz schwimmender Geräte vorteilhaft. Es empfiehlt sich der Einsatz kleiner Saugbagger mit Präzisionssaugköpfen. Sie garantieren eine zugleich schonende und gründliche Entfernung der Schlammschicht vom Gewässergrund. Durch den Transport des Baggergutes in einer schwimmenden Rohrleitung werden die Uferzonen nicht mit schweren Fahrzeugen befahren und somit kaum geschädigt. Weiterhin ist es mit den Saugbaggern möglich, eine kleine Trenn- und Klassieranlage zu speisen, so daß hierfür keine zusätzlichen Pumpen und keine Fremdenergie notwendig ist.

Als Klassierungseinrichtung kommt, wie bereits erwähnt, vorzugsweise ein Hydrozyklon in Betracht, beispielsweise mit zusätzlicher Fluideinspritzung in den Apex. Dies bewirkt zum einen eine wesentliche Erhöhung der Trennschärfe und zum anderen einen Wascheffekt aus den im Apex abzuscheidenden Grobanteilen. Ferner ermöglicht sie einen variablen Trennschnitt, mit dem die Anlage leicht an die verschiedenen Einsatzverhältnisse angepaßt werden kann.

Mit einem weiteren Hydrozyklon kann beispielsweise die Suspension aus dem Oberlauf des ersten Hydrozyklons weiter eingedickt werden. Danach kann dieses eingedickte Material der Entwässerungs- und Trocknungsanlage zugeleitet werden, sofern dieses Material nicht zu sehr kontaminiert ist.

Die Entwässerungs- und Trocknungsanlage umfaßt überdachte Trocknungsgestelle für zu trocknende Feststoffe des aufzubereitenden Materials, denen verschiedene Sedimentationsstufen mit Sedimentationskästen vorgeordnet sein können.

Zur Reinigung der letztendlich abgeschiedenen Flüssigkeit bzw. der in den einzelnen Stufen abgeschiedenen Flüssigkeit, ist eine Filteranlage vorgesehen. Diese Filteranlage umfaßt vorzugsweise ein Filter aus pflanzlichem Material, vorzugsweise aus Torf und/oder Schilf. Auch dieser Filteranlage kann erforderlichenfalls noch eine Sedimentationseinrichtung vorgeschaltet sein.

Falls insbesondere die dem ersten Hydrozyklon entnommene flüssige Phase, insbesondere deren Festanteile, zu sehr kontaminiert sind, ist hierfür in der erfindungsgemäßen Vorrichtung eine wahlweise zu beschickende Dekontaminierungseinrichtung vorgesehen. Diese Dekontaminierungseinrichtung umfaßt vorzugsweise einen Dekontaminierungsreaktor, der zwischen der Klassierungseinrichtung und der Entwässerungs- und Trocknungsanlage wahlweise einschaltbar ist.

Der Dekontaminierungsreaktor umfaßt einen Reaktorbehälter zur Einbringung des zu dekontaminierenden Materials, in den wenigstens eine Luftkanone mündet. Mit Hilfe der Luftkanone werden kurzzeitig Luftdruckstöße in den Reaktorbehälter eingeschossen, die das zu dekontaminierende Material jeweils insgesamt erschüttern. Dies zeitigt eine sehr effektive Trennung von Schadstoffen und Festanteilen in dem zu dekontaminierenden Material. Dennoch ist dieses Verfahren bzw. der Betrieb dieses Dekontaminierungsreaktors relativ sparsam im Energieverbrauch, weil die Luftkanone nur sehr kurzzeitig und nur in zeitlichen Abständen abgeschossen zu werden braucht.

Der Dekontaminierungsreaktor ist vorzugsweise mit der Reinigungseinrichtung für die Flüssigkeit flüssigkeitsleitend verbunden, da nach der Dekontaminierung der Festanteile die Schadstoffe gerade im Flüssiganteil zu finden sind.

Die erfindungsgemäße Vorrichtung wird bevorzugt in modularer Bauweise erstellt, um eine solche Vorrichtung als Anlage bei Bedarf flexibel zusammenstellen zu können und einfach auf- und abbauen zu können. Dazu werden vorzugsweise verschiedene Einrichtungen der erfindungsgemäßen Vorrichtung jeweils in entsprechenden Containern untergebracht und bereitgestellt. Hierdurch wird eine äußerst hohe Mobilität der erfindungsgemäßen Vorrichtung erzielt, so daß mit einer solchen Vorrichtung nach und nach die Gewässer oder sonstige Materialansammlungen einer Region saniert werden können.

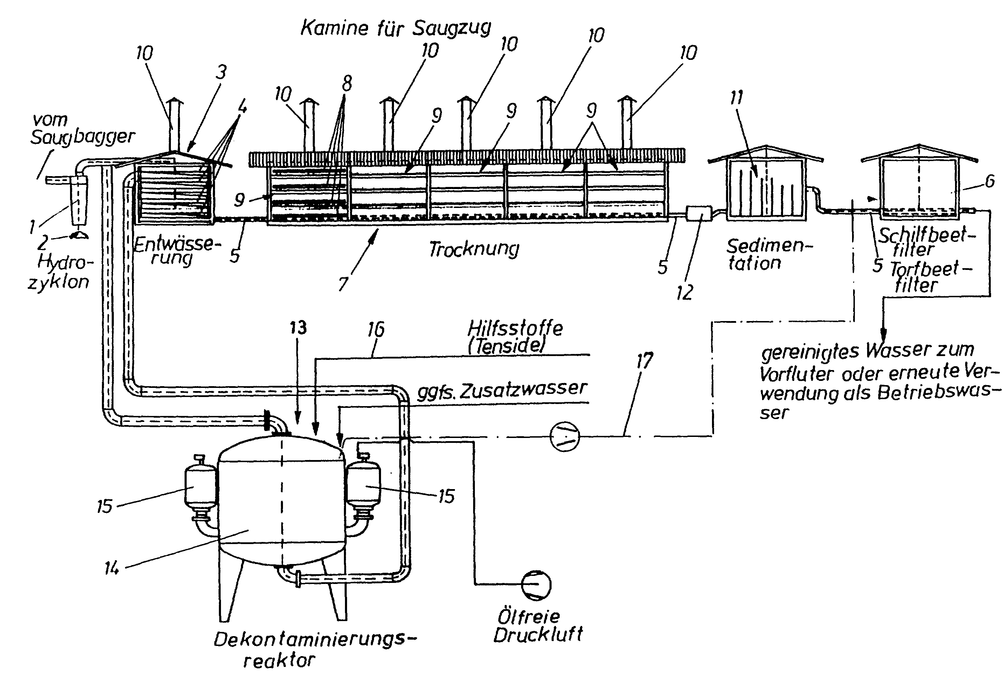

Ein Ausführungsbeispiel, aus dem sich weitere erfinderische Merkmale ergeben, ist in der Zeichnung dargestellt.

Die einzige Figur der Zeichnung zeigt einen schematischen Aufbau einer als Sanierungsanlage zusammengestellten, erfindungsgemäßen Vorrichtung.

Aus einem zu sanierenden Gewässer wird mit einem in der Zeichnung nicht näher dargestellten Saugbagger Schlamm entnommen und zunächst einmal einem Hydrozyklon 1 zugeführt. Dieser Hydrozyklon 1 klassiert das vom Saugbagger kommende Schlammmaterial. Hierdurch werden die Grobanteile aus dem Schlammmaterial, also in erster Linie Sand 2, ausgeschieden. Dieser Sand 2, der in der Regel nicht kontaminiert sein wird, wird einer Halde zur Ablagerung zugeführt.

Die im Hydrozyklon 1 vom Sand 2 getrennte flüssige Phase wird, wenn auch diese nicht kontaminiert ist, einer Entwässerungseinrichtung 3 zugeleitet. Diese Entwässerungseinrichtung umfaßt mehrere Sedimentationskästen 4, in denen sich Feststoffanteile der flüssigen Phase, die von dem Hydrozyklon 1 kommt, absetzen, während abgeschiedene Flüssigkeit durch eine Rohrleitung 5 letztendlich einer Filtereinrichtung 6 zugeleitet wird. Zwischen dem ersten Hydrozyklon 1 und der Entwässerungseinrichtung 3 können ein oder mehrere weitere Hydrozyklone zwischengeschaltet sein, um die vom ersten Hydrozyklon 1 abgeschiedene flüssige Phase vor Erreichen der Entwässerungseinrichtung 3 gegebenenfalls einzudicken.

Die Sedimentationskästen 4 haben im einfachen Falle beispielsweise Lochbleche als Böden.

Die in den Sedimentationskästen 4, vorzugsweise in mehreren Schichten durch mehrfache Beschickung abgelagerten Sedimente werden einer Trocknungseinrichtung 7 zugeführt. Dazu werden beispielsweise die Sedimentationskästen 4 einfach auf Ablageböden 8 von Trocknungsgestellen 9 ausgekippt. In der Trocknungseinrichtung 7 sind vorzugsweise mehrere Trockungsgestelle 9 vorhanden, in denen die Feststoffanteile der flüssigen Phase nach und nach stufenweise eingetrocknet werden. Die jeweils abgeschiedene Flüssigkeit gelangt immer jeweils in die Rohrleitung 5, die durch die Trocknungseinrichtung 7 hindurchführt.

Ebenso wie der Saugbagger kontinuierlich Schlamm aus dem zu sanierenden Gewässer entnehmen kann, können auch das Hydrozyklon 1, die Entwässerungseinrichtung 3 und die Trocknungseinrichtung 7, ebenso wie die Filtereinrichtung 6, kontinuierlich beziehungsweise quasi kontinuierlich arbeiten.

Die Einrichtungen der erfindungsgemäßen Vorrichtung können sehr energiesparend betrieben werden. Die im Hydrozyklon 1 erforderliche geringe Energie, wird im wesentlichen vom Saugbagger selbst geliefert. In der Entwässerungseinrichtung 3 und der Trocknungseinrichtung 7 wird natürliche Energie genutzt, indem, insbesondere in der Trocknungseinrichtung 7, die Sedimente luftgetrocknet werden. Die Trocknungsgestelle 9 sind an den Seiten offen und der Luft ausgesetzt. Die Trocknungseinrichtung 7 ist nur zum Schutz vor Niederschlägen überdacht. Jedem Trocknungsgestell 9 sind Kamine 10 zur Erzeugung eines Saugzuges zugeordnet. Einen entsprechenden Kamin 10 weist auch die Entwässerungseinrichtung 3 auf.

Zwischen der Filtereinrichtung 6 zur Filterung der abgeschiedenen Flüssigkeit und der Trocknungseinrichtung 7 befindet sich in der Rohrleitung 5 bevorzugt noch eine weitere Sedimentationseinrichtung 11. Dieser kann eine kleine Pumpe 12 vorgeschaltet sein.

Die Filtereinrichtung 6 enthält vorzugsweise Filter aus pflanzlichem Material, vorzugsweise Schilfbeetfilter beziehungsweise Torfbeetfilter. Dieses Filtermaterial kann von Zeit zu Zeit thermisch entsorgt werden, insbesondere verbrannt werden. Das durch die Filtereinrichtung 6 gereinigte Wasser kann einem Vorfluter zugeführt werden oder als Betriebswasser verwendet werden.

Für den Fall, daß die im Hydrozyklon 1 abgeschiedene flüssige Phase Kontaminierungen enthält, ist zwischen dem Hydrozyklon 1 und der Entwässerungseinrichtung 3 eine Dekontaminierungseinrichtung beziehungsweise ein Dekontaminierungszweig zwischenschaltbar. Dieser Dekontaminierungszweig umfaßt im wesentlichen einen Dekontaminierungsreaktor 13. Dieser weist einen Reaktorbehälter 14 auf, in den in diesem Ausführungsbeispiel zwei Luftkanonen 15 einmünden.

Im Bedarfsfalle kann die vom Hydrozyklon 1 abgeschiedene flüssige Phase also in den Reaktorbehälter 14 eingeleitet werden. Dort wird sie in zeitlichen Abständen durch Abschließen der Luftkanonen 15 (Blower) kurzzeitig mit Druckluft beaufschlagt und dadurch jeweils insgesamt erschüttert. Dadurch trennen sich an den Feststoffanteilen der flüssigen Phase angelagerte Kontaminierungen von den Feststoffanteilen, die als Sedimente im Reaktorbehälter 14 absinken, wobei die Kontaminierungen in der obenauf schwimmenden Flüssigkeit gelöst werden. Zur Begünstigung beziehungsweise zur Aufrechterhaltung dieser Lösung beziehungsweise der Trennung von den Festanteilen können dem Reaktorbehälter 14 über eine Zuschlagsleitung 16 Hilfsstoffe, vorzugsweise Tenside, zugeführt werden. Die obenauf schwimmende Flüssigkeit, die kontaminiert ist, kann aus dem Reaktorbehälter 14 abgezogen werden und über eine Verbindungsleitung 17 beispielsweise der Filtereinrichtung 6 unmittelbar zugeleitet werden. Die sich im Reaktorbehälter 14 als Sedimente ablagernden Festanteile werden nach ihrer Dekontaminierung der Entwässerungseinrichtung 3, und damit dem normalen Entwässerungs- und Trocknungsvorgang, zugeleitet.

Die letztendlich in der Trocknungseinrichtung 7 getrockneten Feststoffe können auf einer Erdstoffdeponie abgelagert werden.

Sämtliche Einrichtungen der erfindungsgemäßen Vorrichtung können vorzugsweise modular zusammengestellt werden. Insbesondere können die Entwässerungseinrichtung 3, die Trocknungseinrichtung 7 beziehungsweise die Trocknungsgestelle 9, die Sedimentationseinrichtung 11 und die Filtereinrichtung 6 jeweils in ein oder mehreren Containern mobil bereitgestellt und miteinander verbunden werden. Gleiches gilt letztendlich auch für den Dekontaminierungsreaktor 13 und die Klassierungseinrichtung, bestehend aus einem oder mehreren Hydrozyklonen 1.

## Patentansprüche

1. Verfahren zur Aufbereitung eines Dickstoffe enthaltenden pumpfähigen Materials, vorzugsweise zur Sanierung eines Gewässers, insbesondere eines Binnengewässers, bei dem das Material zur Abscheidung von Grobanteilen klassiert wird, die dadurch abgeschiedenen Grobanteile und/oder die sich dadurch ausbildende flüssige Phase weiter entwässert und/oder getrocknet werden und die bei der Klassierung und/oder Entwässerung aus dem Material und/oder der flüssigen Phase abgeschiedene Flüssigkeit gereinigt wird,
**dadurch gekennzeichnet,**
daß kontaminierte Anteile des Materials dadurch dekontaminiert werden, daß Kontaminierungsstoffe in der flüssigen Phase nach der Klassierung und vor der Entwässerung durch Energiebeaufschlagung mechanisch von den Feststoffen der zu dekontaminierenden Anteile des Materials getrennt werden, indem die Energiebeaufschlagung mittels kurzzeitiger Druckbeaufschlagung mit wenigstens einer Luftkanone in einem entsprechenden Reaktor erfolgt.

2. Verfahren nach Anspruch 1, dadurch gekennzeichnet, daß die Trennung zwischen den Kontaminierungsstoffen und den Feststoffen der Materialanteile durch Zusatz von Trennhilfsmitteln, vorzugsweise von Tensiden, aufrechterhalten wird.

3. Verfahren nach Anspruch 1 oder 2, dadurch gekennzeichnet, daß die durch die Klassierung entstehende flüssige Phase, vorzugsweise nach einer evtl. Eindickung, durch einen Entwässerungs- und Trocknungsprozeß weitergehend in Feststoffe und Flüssigkeit getrennt wird, der etwa einem Entwässerungs- und Trocknungsprozeß für Ziegelrohlinge bei der Ziegelherstellung entspricht.

4. Verfahren nach Anspruch 3, dadurch gekennzeichnet, daß die flüssige Phase einer Sedimentationseinrichtung zugeleitet wird, in der sich Feststoffe großflächig in dünnen Schichten in Sedimentationskästen ablagern.

5. Verfahren nach Anspruch 4, dadurch gekennzeichnet, daß die Sedimentationskästen zur Erreichung einer bestimmten Sedimenthöhe mehrmals beschickt werden.

6. Verfahren nach einem der Ansprüche 3 bis 5, dadurch gekennzeichnet, daß Feststoffe der flüssigen Phase zur natürlichen Trocknung auf der Luft ausgesetzten, überdachten Trocknungsgestellen gelagert werden.

7. Verfahren nach einem oder mehreren der vorhergehenden Ansprüche, dadurch gekennzeichnet, daß die abgeschiedene Flüssigkeit mit einem Filter aus pflanzlichem Material, vorzugsweise mit einem Torf- und/oder Schilfbeetfilter, gefiltert wird.

8. Verfahren nach Anspruch 7, dadurch gekennzeichnet, daß das Pflanzenmaterial des Filters mit den Filterrückständen thermisch entsorgt wird.

9. Vorrichtung zur Aufbereitung eines Dickstoffe enthaltenden pumpfähigen Materials, vorzugsweise zur Sanierung eines Gewässers, insbesondere eines Binnengewässers, vorzugsweise zur Durchführung des Verfahren nach einem oder mehreren der vorhergehenden Ansprüche, die eine Entwässerungs- und Trocknungsanlage für das Material und eine Reinigungseinrichtung zur Reinigung von in der Entwässerungs- und Trocknungsanlage abgeschiedener Flüssigkeit umfaßt, wobei der Entwässerungs- und Trocknungsanlage eine Klassierungseinrichtung vorgeschaltet ist,
**gekennzeichnet durch**
einen Dekontaminierungsreaktor (13) der einen Reaktorbehälter (14) zur Einbringung zu dekontaminierenden Materials aufweist, in den wenigstens eine Luftkanone (15) zur mechanischen Trennung der Kontaminierungsstoffe von den Feststoffen der zu dekontaminierenden Anteile des Materials per Luftdruckbeaufschlagung mündet.

10. Vorrichtung nach Anspruch 9, dadurch gekennzeichnet, daß der Dekontaminierungsreaktor zwischen der Klassierungseinrichtung und der Entwässerungs- und Trocknungsanlage zwischengeschaltet ist.

11. Vorrichtung nach Anspruch 9 oder 10, gekennzeichnet durch eine Filteranlage mit einem Filter aus pflanzlichem Material, vorzugsweise aus Torf und/oder Schilf.

12. Vorrichtung nach Anspruch 11, gekennzeichnet durch eine der Filteranlage vorgeschaltete Sedimentationseinrichtung (11).

## Claims

1. A process for treating a pumpable substance containing thick matter, preferably for cleaning up a stretch of water, in particular an inland stretch of water, in which the substance is classified to separate coarse constituent-parts, the coarse constituent-parts thereby separated and/or the liquid phase thereby forming is/are furthermore dewatered and/or dried and the liquid separated from the substance and/or the liquid phase during classification and/or dewatering is cleaned, characterised in that contaminated constituent-parts of the substance are thereby decontaminated, in that after the classification and before the dewatering, contaminating matter in the liquid phase is, through the action of energy, mechanically separated from the solids of the substance constituent-parts to be decontaminated, by the energy action taking place in an appropriate reactor by means of short-term pressure action using at least one air gun.

2. A process in accordance with Claim 1, characterised in that the contaminating matter and the solids of the substance constituent-parts are kept separated through the addition of separating aids, preferably surfactants.

3. A process in accordance with Claim 1 or 2, characterised in that the liquid phase arising through the classification continues to be separated, preferably after a possible thickening, into solids and liquid by a dewatering and drying operation corresponding substantially to a dewatering and drying operation for green bricks during brick manufacture.

4. A process in accordance with Claim 3, characterised in that the liquid phase is supplied to a sedimentation apparatus in which solids deposit, over a large area and in thin layers, in sedimentation boxes.

5. A process in accordance with Claim 4, characterised in that the sedimentation boxes are filled repeatedly in order to reach a certain sediment height.

6. A process in accordance with any one of Claims 3 to 5, characterised in that for the purpose of natural drying, solids of the liquid phase are placed on roofed-over drying frames exposed to air.

7. A process in accordance with one or more of the preceding Claims, characterised in that the separated liquid is filtered using a filter of plant material, preferably using a peat and/or reed bed filter.

8. A process in accordance with Claim 7, characterised in that the plant material of the filter is thermally disposed of as waste together with the filtration residues.

9. A device for treating a pumpable substance containing thick matter, preferably for cleaning up a stretch of water, in particular an inland stretch of water, preferably for implementing the process in accordance with one or more of the preceding Claims, which device comprises a dewatering and drying unit for the substance and a cleaning apparatus to clean liquid separated in the dewatering and drying unit, a classification apparatus being connected upstream of the dewatering and drying unit, characterised by a decontaminating reactor (13) which has a reactor container (14) which is for introducing a substance to be decontaminated and into which at least one air gun (15) for mechanical separation, by the action of air pressure, of the contaminating matter from the solids of the substance constituent-parts to be decontaminated runs.

10. A device in accordance with Claim 9, characterised in that the decontaminating reactor is interposed between the classification apparatus and the dewatering and drying unit.

11. A device in accordance with Claim 9 or 10, characterised by a filter unit with a filter of plant material, preferably of peat and/or reed.

12. A device in accordance with Claim 11, characterised by a sedimentation apparatus (11) connected upstream of the filter unit.

## Revendications

1. Procédé de traitement d'un matériau susceptible d'être pompé et contenant des matières épaisses, de préférence pour assainir des eaux, en particulier des eaux intérieures, dans lequel le matériau est criblé pour la séparation des fractions grossières, les fractions grossières ainsi séparées et/ou la phase liquide qui en résulte sont encore déshydratées et/ou séchées et le liquide séparé du matériau et/ou de la phase liquide, lors du criblage, et/ou de la déshydratation, est épuré,
caractérisé
en ce que les fractions contaminées du matériau sont décontaminées en ce que des substances de contamination contenues dans la phase liquide après le criblage et avant la déshydratation sont séparées mécaniquement, par apport d'énergie, des matières solides des fractions à décontaminer du matériau, en ce que l'apport d'énergie s'effectue par action de courte durée d'une pression avec au moins un canon à air dans un réacteur approprié.

2. Procédé selon la revendication 1, caractérisé en ce que la séparation entre les substances de contamination et la matière solide des fractions du matériau est maintenue par ajout d'auxiliaires de séparation, de préférence de tensioactifs.

3. Procédé selon la revendication 1 ou 2, caractérisé en ce que la phase liquide formée après criblage est séparée, de préférence après un éventuel épaississement, par un processus de déshydratation et de séchage, en matières solides et liquides, qui correspond à peu près à un processus de déshydratation et de séchage des tuiles crues lors de la fabrication de tuiles.

4. Procédé selon la revendication 3, caractérisé en ce que la phase liquide est acheminée vers un dispositif de sédimentation, dans lequel les matières solides se déposent sur une grande surface, en couche mince, dans des caissons de sédimentation.

5. Procédé selon la revendication 4, caractérisé en ce que les caissons de sédimentation sont chargés plusieurs fois pour obtenir une hauteur de sédimentation déterminée.

6. Procédé selon l'une des revendications 3 à 5, caractérisé en ce que pour le séchage naturel les matières solides de la phase liquide sont stockées sur des emplacements de séchage recouverts d'un toit et exposés à l'air.

7. Procédé selon une ou plusieurs des revendications précédentes, caractérisé en ce que le liquide séparé est filtré au moyen d'un filtre constitué d'une matière végétale, de préférence au moyen d'un filtre de tourbe et/ou de jonc.

8. Procédé selon la revendication 7, caractérisé en ce que la matière végétale du filtre est éliminée thermiquement avec les résidus de filtrage.

9. Dispositif de traitement d'un matériau susceptible d'être pompé et contenant des matières épaisses, de préférence pour assainir des eaux, en particulier des eaux intérieures, de préférence pour la mise en oeuvre du procédé selon une ou plusieurs des revendications précédentes, qui comporte une installation de déshydratation et de séchage pour le matériau et un dispositif d'épuration pour l'épuration du liquide séparé dans l'installation de déshydratation et de séchage, un dispositif de séparation étant monté en amont de l'installation de déshydratation et de séchage, caractérisé par
un réacteur de décontamination (13) qui comporte un récipient de réacteur (14) pour l'introduction du matériau à décontaminer, dans lequel débouche au moins un canon à air (15) pour la séparation mécanique des matières de contamination et des matières solides des fractions à décontaminer du matériau, par action d'air comprimé.

10. Dispositif selon la revendication 9, caractérisé en ce que le réacteur de décontamination est monté entre le dispositif de séparation et l'installation de déshydratation et de séchage.

11. Dispositif selon la revendication 9 ou 10, caractérisé par une installation de filtrage comportant un filtre en une matière végétale, de préférence en tourbe et/ou jonc.

12. Dispositif selon la revendication 11, caractérisé par un dispositif de sédimentation (11) monté en amont de l'installation de filtrage.
